# EUROPÄISCHE PATENTSCHRIFT

(11) **EP 1 598 235 B1**
(45) Veröffentlichungstag und Bekanntmachung des Hinweises auf die Patenterteilung: **12.09.2007**
(21) Anmeldenummer: 05009966.2
(22) Anmeldetag: 06.05.2005
(51) Int. Cl.: B60N 2/00, B60N 2/02, B60R 22/34, B60R 22/46

(54) **Verfahren zum Erhöhen der Sicherheit von Fahrzeugbenutzern**
Process for increasing the safety of vehicle users
Procédé pour augmenter la sécurité des utilisateurs d'un véhicule

(30) Priorität: 18.05.2004 DE 102004024531
(43) Veröffentlichungstag der Anmeldung: 23.11.2005
(73) Patentinhaber: Bayerische Motoren Werke Aktiengesellschaft, 80809 München (DE)
(72) Erfinder: Bauer, Michael, 85591 Vaterstetten (DE); Schalwig, Jan, 80797 München (DE); Lu, Yan, 85356 Freising (DE); Weidhaas, Stefan, 80807 München (DE)

(56) Entgegenhaltungen:
- EP-B- 0 932 519
- DE-A1- 4 332 205

## Beschreibung

Die Erfindung bezieht sich auf ein Verfahren zum Erhöhen der Sicherheit von Fahrzeugbenutzern.

Ein derartiges Verfahren ist aus der EP 0 932 519 B1 bekannt. Dabei wird die Verstellung einer Fahrzeugsitzkomponente, beispielsweise der Sitzwangen, während einer Fahrt selbsttätig vorgenommen, um die Seitenführungskraft des Fahrgastes an die durch die Fahrdynamik bedingte Bewegung des Fahrgastes relativ zum Fahrzeugsitz auszugleichen und die Sicherheit des Fahrgastes zu erhöhen. Aus der DE 4 332 205 A1 ist ein Sicherheitsgurt bekannt, der bei erhöhter Geschwindigkeit vorgeschafft wird.

Die Information über die Betriebsparameter des Fahrzeugs liegen in der Regel in verschiedenen Antriebs-Steuergeräten des Fahrzeugs bereits vor. Hier zu nennen ist das Motorsteuergerät und das Getriebesteuergerät. Beide Geräte können für sich oder in Verbindung miteinander die zum Einstellen der Sitzkomponenten notwendigen Informationen liefern. Dadurch kann die seitliche Abstützung des Fahrgastes abhängig von seinem Fahrverhalten sowie den Fahrbahneinflüssen und der Fahrsituation variiert werden.

Damit ist es auch möglich die Verstellung der Sitzkomponente(n) bei einer beschleunigten Bewegung des Fahrzeugs so vorzunehmen, dass sie der durch die Beschleunigung bedingten Bewegung des Fahrgasts entgegenwirkt.

Der Erfindung liegt die Aufgabe zugrunde, ein Verfahren der eingangs genannten Art zu schaffen, mit dem die Sicherheit der Fahrzeuginsassen weiter erhöht wird.

Die Erfindung löst diese Aufgabe durch die Merkmale des Patentanspruchs 1.

Erfindungsgemäß wird nunmehr ergänzend oder an Stelle einer Sitzkomponentenverstellung bei einer Fahrt auf einer abwärts gerichteten Fahrbahn und/oder einer seitlich schrägen Fahrbahn der Bewegung des Fahrzeugbenutzers relativ zum Fahrzeugsitz mittels des angelegten Sicherheitsgurts zumindest teilweise entgegengewirkt. Dadurch wird der Fahrgast an seinem Sitz festgehalten und eine Relativbewegung des Fahrgastes relativ zu seinem Sitz wirksam entgegengewirkt. Der Fahrer kann sich auch bei extremen Fahrmanövern auf das Verkehrgeschehen konzentrieren und läuft nicht mehr Gefahr, dabei den Halt auf dem Sitz zu verlieren.

Diese Fixierung kann mittels des gesamten Sicherheitsgurtes erfolgen, indem dieser mittels eines Gurtstrammers angezogen bzw. am Ausziehen gehindert wird. Besonders vorteilhaft ist es demgegenüber, wenn der Fahrzeugbenutzer nur im Bereich des Beckens fixiert wird. Er ist dann im Bereich des Oberkörpers beweglich und fühlt sich im Bereich des Beckens fixiert und damit gesichert, gleichzeitig aber fühlt er sich nicht in seiner Bewegungsfreiheit eingeschränkt.

Wie an sich aus der EP 0 932 519 B1 bekannt, kann die Position des Fahrzeugbenutzers mittels Drucksensoren, die im Sitz angeordnet sind, ermittelt werden. Im Rahmen der Erfindung können die Ausgangssignale der Drucksensoren zusammen mit auf die Lage und/oder Bewegung des Fahrzeugs ansprechenden Bewegungssensoren einem Steuergerät für einen Gurtstrammer zugeleitet werden.

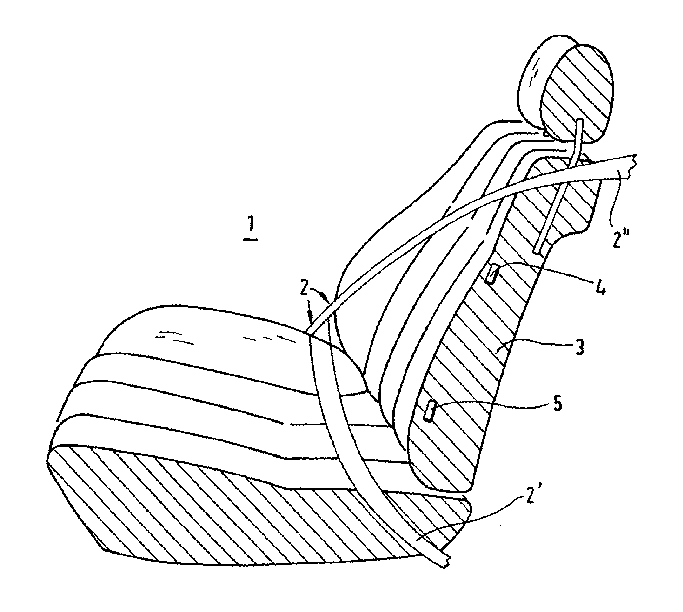

Anhand der Zeichnung ist die Erfindung weiter erläutert.

Die einzige Figur zeigt einen Fahrzeugsitz 1 mit einem Sicherheitsgurt 2 im Schnitt und von der Seite. Der Sicherheitsgurt besitzt einen Beckengurt 2' und einen Schultergurt 2". Im Bereich der Rückenlehne 3 sind Drucksensoren angeordnet, von denen beispielhaft zwei Sensoren 4 und 5 dargestellt sind.

Während einer Bewegung des Fahrzeugs werden mittels einer entsprechenden Quer- und Längsbeschleunigungssensorik (nicht dargestellt) sowie ergänzend mit Hilfe eines Navigationssystems (ebenfalls nicht gezeigt) eine Fahrt des Fahrzeugs bergab bzw. um eine Kurve erkannt. Wird über die Drucksensoren 3 und 4 festgestellt, dass der Fahrer/ Fahrgast dabei seine übliche Sitzposition verlässt, wird ein elektromotorischer Gurtstrammer für den Beckengurt 2' betätigt und der Beckengurt 2' gestrafft. Bei Beendigung der extremen Fahrzeugbewegung wird der Gurtstrammer wieder deaktiviert. Der Fahrer und die Fahrgäste erhalten wieder ihre nahezu uneingeschränkte Bewegungsfreiheit zurück.

Bei der Quer- und/oder Längsbeschleunigungssensorik kann es sich um vorzugsweise um Neigungssensoren handeln, der im Fahrzeug ohnehin bereits vorhanden ist und die ansonsten dazu dienen, bei abgestelltem Fahrzeug einen unautorisierten Abschleppversuch zu detektieren. Die Sensoren reagieren auf eine Änderung der Neigung der Fahrzeuglängsachse gegenüber der Horizontalen. Damit können auch die Drucksensoren 3 und 4 zur Ermittlung der Sitzposition des Fahrers/Fahrgastes entfallen.

Dadurch wird der Fahrzeugbenutzer im Beckenbereich während einer beschleunigten Bewegung des Fahrzeugs auf seinem Sitz fixiert und die Gefahr beseitigt, die richtige Sitzposition zu verlieren. Der Fahrer kann in der gewünschten und für die sichere Führung des Fahrzeugs erforderlichen Sitzposition gehalten werden.

## Patentansprüche

1. Fahrzeugsitz
mit einem straffbaren Sicherheitsgurt und einer Sensorik
**dadurch gekennzeichnet, dass**
die Sensorik zum Erfassen der Fahrzeugneigung eingerichtet ist, und dass der Sicherheitsgurt in Abhängigkeit von der Fahrzeugneigung derart gestrafft wird, dass er einer Bewegung des Fahrzeugbenutzers relativ zum Fahrzeugsitz entgegen wirkt.

2. Fahrzeugsitz nach Anspruch 1,
bei dem bei einer Fahrt auf einer abwärts gerichteten Fahrbahn einer Bewegung des Fahrzeugbenutzers relativ zum Fahrzeugsitz mittels des angelegten Sicherheitsgurts zumindest teilweise entgegengewirkt wird.

3. Fahrzeugsitz nach einem der vorhergehenden Ansprüche,
bei dem bei einer Fahrt auf einer schräg geneigten Fahrbahn einer Bewegung des Fahrzeugbenutzers relativ zum Fahrzeugsitz mittels des angelegten Sicherheitsgurts zumindest teilweise entgegengewirkt wird.

4. Fahrzeugsitz nach einem der vorhergehenden Ansprüche,
bei dem der Fahrzeugbenutzer im Bereich des Beckens fixiert ist.

## Claims

1. A vehicle seat with a seat belt which can be tightened and a sensor system, **characterised in that** the sensor system is set up to detect the vehicle incline, and **in that** the seat belt is tightened as a function of the vehicle incline in such a way that it counteracts a movement of the vehicle user relative to the vehicle seat.

2. A vehicle seat according to claim 1, in which, during a journey on a downhill road, a movement of the vehicle user relative to the vehicle seat is at least partially counteracted by means of the applied seat belt.

3. A vehicle seat according to any one of the preceding claims, in which during a journey on an obliquely inclined road, a movement of the vehicle user relative to the vehicle seat is at least partially counteracted by means of the applied seat belt.

4. A vehicle seat according to any one of the preceding claims, in which the vehicle user is restrained in the region of the pelvis.

## Revendications

1. Siège de véhicule comportant une ceinture de sécurité avec raidisseur et des capteurs,
**caractérisé en ce que**
les capteurs sont conçus pour saisir l'inclinaison du véhicule et la ceinture de sécurité est tendue en fonction de l'inclinaison du véhicule pour s'opposer à un mouvement de l'utilisateur du véhicule par rapport à son siège.

2. Siège de véhicule selon la revendication 1,
**caractérisé en ce qu'**
en cas de roulage sur une chaussée descendante la ceinture de sécurité s'oppose au moins en partie au mouvement de l'utilisateur par rapport au siège du véhicule.

3. Siège de véhicule selon l'une quelconque des revendications précédentes,
**caractérisé en ce qu'**
en cas de roulage sur une chaussée inclinée transversalement, la ceinture de sécurité s'oppose au moins en partie au mouvement de l'utilisateur par rapport à son siège.

4. Siège de véhicule selon l'une quelconque des revendications précédentes,
**caractérisé en ce que**
l'utilisateur du véhicule est retenu au niveau du bassin.
